(19) **Europäisches Patentamt**
**European Patent Office**
**Office européen des brevets**

(11) **EP 3 553 531 B1**

(12) **EUROPEAN PATENT SPECIFICATION**

(45) Date of publication and mention
of the grant of the patent:
**05.07.2023 Bulletin 2023/27**

(21) Application number: **17878028.4**

(22) Date of filing: **08.12.2017**

(51) International Patent Classification (IPC):
***G01P 3/49*** *(2006.01)* ***G01P 3/50*** *(2006.01)*

(52) Cooperative Patent Classification (CPC):
**G01P 3/50; G01P 3/49; G01P 3/505**

(86) International application number:
**PCT/JP2017/044178**

(87) International publication number:
**WO 2018/105727 (14.06.2018 Gazette 2018/24)**

(54) **SPEED DETECTION DEVICE**

GESCHWINDIGKEITSDETEKTIONSVORRICHTUNG

DISPOSITIF DE DÉTECTION DE VITESSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2016 JP 2016239772**

(43) Date of publication of application:
**16.10.2019 Bulletin 2019/42**

(73) Proprietor: **Nabtesco Corporation
Tokyo 102-0093 (JP)**

(72) Inventors:
• **FLANKL, Michael
8092 Zurich (CH)**
• **TUEYSUEZ, Arda
8092 Zurich (CH)**

• **KOLAR, Johann W.
8092 Zurich (CH)**
• **TSUKADA, Yusuke
Kobe-shi, Hyogo 651-2271 (JP)**
• **NAKAMURA, Kazuhito
Kobe-shi, Hyogo 651-2271 (JP)**

(74) Representative: **Grünecker Patent- und
Rechtsanwälte
PartG mbB
Leopoldstraße 4
80802 München (DE)**

(56) References cited:
EP-A1- 3 062 067    EP-A1- 3 309 945
GB-A- 2 279 459    JP-A- 2008 271 614
JP-A- 2016 008 929    JP-U- S5 458 171
US-A1- 2013 127 268    US-A1- 2015 323 349

## Description

### TECHNICAL FIELD

The present invention relates to a speed detecting device for detecting a speed of a moving body.

### BACKGROUND

A technique has been disclosed in which a non-contact electromagnetic induction sensor is used to detect a moving speed of a moving body including a magnet attached thereto, the sensor being configured to output an induction voltage according to a rate of change in magnetic flux produced by the magnet (see Japanese Patent Application Publication No. JP 03 - 025 372 A).
Document EP 3 309 945 A1 relates to a rotary electric machine including: a permanent magnet rotatable around a first rotational shaft and disposed at a distance from a main surface of a moving body rotating or moving, at least a part of a side surface of the permanent magnet continuous to an outer peripheral surface thereof being opposed to the main surface of the moving body, wherein the permanent magnet is rotated around the first rotational shaft by a reaction force acting on the permanent magnet, the reaction force being caused by eddy currents produced in the main surface of the moving body in such a direction as to hinder a change of magnetic flux from the permanent magnet, and a surface speed of the side surface of the permanent magnet opposed to the moving body is lower than a surface speed of the main surface of the moving body opposed thereto.
Document US 2013 / 127 268 A1 relates to an electricity generator system. The system comprises: a conductor; a magnet; and conversion means. The magnet is configured such that motion of the conductor relative to the magnet induces a current in the conductor and the induced current in the conductor causes motion of the magnet. The conversion means are configured to convert motion of the magnet to electricity.
Document JP 2008 271 614 A relates to a power transmission device using a magnetic joint, and configured to determine the following correlations: correlation A between the rotational speed of the driven device obtained when the rotational speed is increased and the distance D between the rotating plate and the magnet plate of the magnetic joint; and correlation B between the rotational speed obtained when the rotational speed is reduced and the distance D between the rotating plate and the magnet plate. The distance D is set based on these correlations A, B. The distance D is differently set when the rotational speed of the driven device is increased to target rotational speed E and when the rotational speed of the driven device is reduced to the target rotational speed E.

### SUMMARY

While being capable of detecting the moving speed of the moving body in a non-contact manner, the technique disclosed in Japanese Patent Application Publication No. JP 03 - 025 372 A requires that the magnet be attached to the moving body, thus failing to detect a moving speed of a moving body that does not include the magnet. Furthermore, there is also known a sensor for detecting a moving speed of a moving body in a contact manner. Such a contact type sensor, however, is susceptible to breakage due to an impact such as vibrations, thus being disadvantageous in terms of reliability and durability.
The present invention is intended to solve the above-described problems, and one object thereof is to provide a speed detecting device capable of accurately detecting a moving or rotating speed of a moving body in a non-contact manner.
In order to solve the above-described problems, one aspect of the present invention provides a speed detecting device including a rotating body including a permanent magnet, the rotating body being spaced above a principal surface of a moving body, the moving body being a conductor configured to move or rotate, the permanent magnet being configured to rotate about a predetermined rotation axis by a Lorentz force produced in accordance with a moving or rotating direction of the moving body, a detector for detecting a rotating speed of the rotating body, and a moving speed estimating unit for estimating a moving or rotating speed of the moving body from the rotating speed of the rotating body detected by the detector, based on a previously determined correlation between the moving or rotating speed of the moving body and the rotating speed of the rotating body.
A magnetic coupling degree measuring unit for measuring a degree of magnetic coupling is included between the rotating body and the moving body and a correlation detecting unit for detecting a correlation between the moving or rotating speed of the moving body and the rotating speed of the rotating body, for each of a plurality of degrees of magnetic coupling between the rotating body and the moving body. The moving speed estimating unit estimates the moving or rotating speed of the moving body, based on, among a plurality of correlations detected by the correlation detecting unit, a correlation corresponding to the degree of magnetic coupling measured by the magnetic coupling degree measuring unit.

The magnetic coupling degree measuring unit may measure the degree of magnetic coupling, based on a gap between the rotating body and the moving body and a degree of overlapping between the respective opposed surfaces of the rotating body and the moving body.

The rotating body may be spaced from and opposed to the principal surface of the moving body, the principal surface being a side surface of the moving body continuous with an outer peripheral surface of the moving body.

It is possible to further include a protective member covering at least part of an outer surface of the rotating body including a surface thereof opposed to the principal surface of the moving body and a magnetic material removing unit for removing a magnetic material adhering to a surface of the protective member opposed to the principal surface of the moving body.

The permanent magnet may have two or more magnetic poles opposed to the moving body.

It is possible to further include a power generator for converting kinetic energy produced by rotation of the rotating body into electric energy and a capacitor for storing the electric energy obtained through conversion by the power generator. The electric energy stored by the capacitor is used as a power source for at least one of the detector and the moving speed estimating unit.

According to the present invention, it is possible to accurately detect a moving or rotating speed of a moving body in a non-contact manner.

## BRIEF DESCRIPTION OF THE DRAWINGS

Fig. 1 is a block diagram showing a schematic configuration of a speed detecting device according to a first embodiment which is not according to the invention.

Fig. 2 is a view showing an example in which a principal surface of a moving body and a principal surface of a rotating body are opposed to each other in a partially overlapping state.

Fig. 3 is a view showing an example in which a surface or an outer peripheral surface of the moving body and an outer peripheral surface of the rotating body are opposed to each other.

Fig. 4 is a view explaining a principle of rotation of the rotating body caused by eddy currents produced in a side surface of the moving body.

Fig. 5 is a graph showing a correlation between a moving speed of the moving body and a rotating speed of the rotating body.

Fig. 6 includes a graph showing a correlation between the rotating speed of the rotating body and a gap between the moving body and the rotating body and a graph showing a correlation between the gap and a response speed of the rotating body.

Fig. 7 is a block diagram showing a schematic configuration of a speed detecting device according to a second embodiment according to the present invention.

Fig. 8 is a block diagram showing a schematic configuration of a speed detecting device according to a third embodiment, which is not according to the invention.

Fig. 9 is an exploded perspective view of a non-contact power generator including the speed detecting device shown in Fig. 8.

Fig. 10 is a sectional view of the non-contact power generator shown in Fig. 9.

Fig. 11A is a view showing a first modification example of the speed detecting device.

Fig. 11B is a view showing a second modification example of the speed detecting device.

## DESCRIPTION OF EXAMPLE EMBODIMENTS

Embodiments of the present invention will be hereinafter described in detail.

(First Embodiment - not according to the invention)

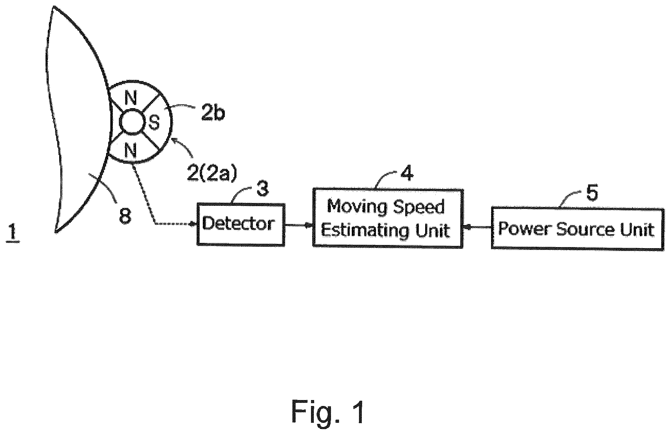

Fig. 1 is a block diagram showing a schematic configuration of a speed detecting device 1 according to a first embodiment of the present invention. The speed detecting device 1 in FIG. 1 is provided with a rotating body 2, a detector 3, a moving speed estimating unit 4, and a power source unit 5.

The rotating body 2 is spaced above a principal surface of a moving body 8, the moving body 8 being a conductor that moves or rotates. The rotating body 2 includes a permanent magnet 2a that rotates about a predetermined rotation axis by a Lorentz force produced in accordance with a moving or rotating direction of the moving body 8. The rotating body 2 is rotatable about the predetermined rotation axis. The rotating body 2 rotates clockwise or counterclockwise in accordance with the moving or rotating direction of the moving body 8. The permanent magnet 2a of the rotating body 2 has a plurality of magnetic poles 2b arranged circumferentially. The number of magnetic poles 2b included in the permanent magnet 2a is not particularly limited as long as the number is two or more. As the number of the magnetic poles 2b increases, unevenness in rotational force (a cogging torque) due to a rotational angle of the rotating body 2 decreases. In a case, however, where there is a wide gap between the moving body 8 and the rotating body 2, when the number of magnetic poles 2b is increased, the magnitude of a magnetic force per each of the magnetic poles 2b decreases to reduce magnetic fluxes reaching the moving body 8, so that a force for rotating the rotating body 2 is weakened.

The moving body 8 is a dynamic body that rotates, such as a wheel of a vehicle, or a dynamic body that moves in one direction or in a plurality of directions. The moving body 8 produces an eddy current in the principal surface thereof opposed to the rotating body 2. Accordingly, it is required that the principal surface of the moving body 8 be formed of an electrically conductive material, such as metal, that can produce an eddy current.

The detector 3 detects a rotating speed of the rotating body 2. The detector 3 may be of a non-contact type or a contact type. The detector 3 of the non-contact type may be formed of a Hall element utilizing the Hall effect, an encoder using an optical slit, a coil utilizing an induced electromotive force, or a proximity sensor of a capacitance type, an induction type, or a Hall element type utilizing the number of gear teeth or a variation in gap. The detector 3 of the contact type may be formed of, for example, a potentiometer mounted to a rotary shaft of the rotating body 2. As described above, a specific configuration of the detector 3 is not particularly limited.

The moving speed estimating unit 4 estimates a moving or rotating speed of the moving body 8 from the rotating speed of the rotating body 2 detected by the detector 3, based on a previously determined correlation between the moving or rotating speed of the moving body 8 and the rotating speed of the rotating body 2. In a more specific example, the moving speed estimating unit 4 estimates the moving or rotating speed of the moving body 8 by using the correlation between the moving or rotating speed of the moving body 8 and the rotating speed of the rotating body 2 in a case where a degree of magnetic coupling between the rotating body 2 and the moving body 8 is predetermined.

The power source unit 5 supplies a power source voltage to the units in the speed detecting device 1 shown in Fig. 1. In Fig. 1, an arrow line indicates that the power source voltage is supplied from the power source unit 5 to the moving speed estimating unit 4, and the power source voltage may be supplied also to the detector 3.

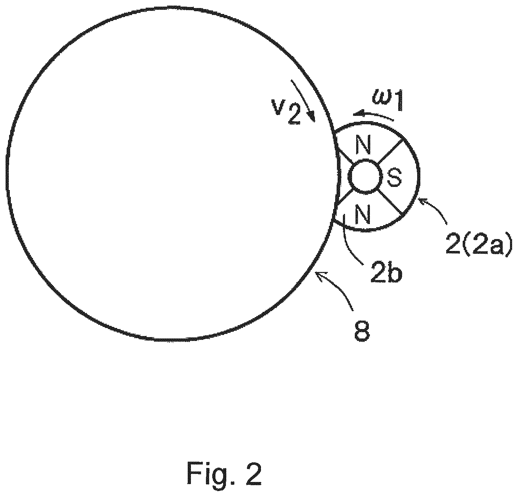

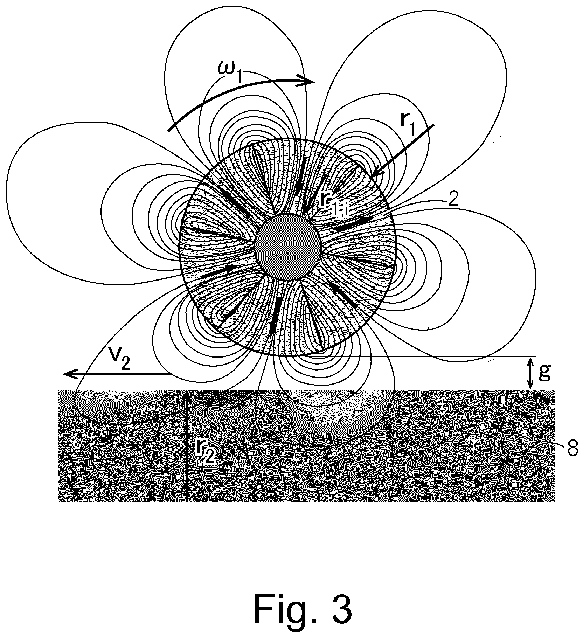

The following first describes a principle of rotation of the rotating body 2 caused in accordance with movement of the moving body 8. The moving body 8 and the rotating body 2 are opposed to each other. Fig. 2 shows an example in which the principal surface of the moving body 8, which is a side surface thereof, and a principal surface of the rotating body 2 are disposed to face each other so that the principal surface of the moving body 8 and the principal surface of the rotating body 2 are opposed to each other in a partially overlapping state. In a case where the entire principal surface of the rotating body 2 is opposed to the principal surface of the moving body 8 in an overlapping manner, the rotating body 2 hardly rotates, and this arrangement, therefore, is not preferable. Instead of the arrangement in which the side surface of the moving body 8 is opposed to the principal surface of the rotating body 2, a surface or an outer peripheral surface of the moving body 8 may be opposed to an outer peripheral surface of the rotating body 2 as shown in Fig. 3.

In this embodiment, eddy currents are produced in a side surface 8a of the moving body 8 by magnetic fluxes from the magnetic poles 2b of the permanent magnet 2a in the rotating body 2. Therefore, a gap between a first side surface 2d of the rotating body 2 and the side surface 8a of the moving body 8 is limited to a range within which magnetic fluxes from the magnetic poles 2b of the rotating body 2 can reach the moving body 8.

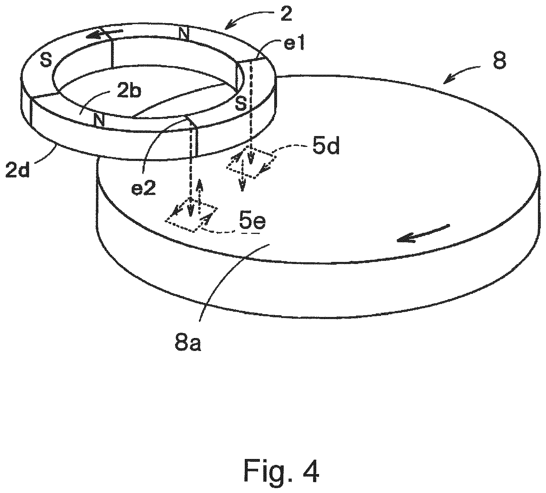

The magnetic poles 2b of the permanent magnet 2a are magnetized in a direction toward the side surface of the moving body 8 opposed to the magnetic poles 2b or a direction opposite thereto. Furthermore, magnetization directions of each pair of adjacent magnetic poles 2b of the permanent magnet 2a are opposite to each other. In Fig. 3, the magnetization directions of the magnetic poles 2b of the permanent magnet 2a are indicated by arrows. As shown in Fig. 3 and Fig. 4, the first side surface 2d of the rotating body 2 includes N-poles and S-poles alternating circumferentially. Furthermore, polarities in a side surface of the rotating body 2 opposite to the first side surface 2d opposed to the moving body 8 are opposite to those in the first side surface 2d.

Fig. 4 is a view explaining a principle of rotation of the rotating body 2 caused by eddy currents 5d, 5e produced in the side surface 8a of the moving body 8. Magnetic fluxes from magnetic poles 2b opposed to the side surface of the moving body 8, among the plurality of magnetic poles 2b arranged circumferentially in the first side surface 2d of the rotating body 2, propagate toward the side surface 8a of the moving body 8. There is an air gap between the first side surface 2d of the rotating body 2 and the side surface 8a of the moving body 8, and the magnetic fluxes from the rotating body 2 propagate through the air gap.

When the moving body 8 rotates, eddy currents are produced in the side surface of the moving body 8 in such directions as to hinder a change in the magnetic fluxes from the rotating body 2. The rotating body 2 is caused to rotate by an interaction (a repulsive force and an attractive force) between magnetic fluxes produced by the eddy currents and the magnetic fluxes from the rotating body 2. The side surface 2d of the rotating body 2 has a surface speed lower than a surface speed of the side surface 8a of the moving body 8 opposed thereto.

For example, when an N-pole of the rotating body 2 is opposed to the side surface 8a of the moving body 8, a direction of the eddy current 5d produced in the side surface 8a of the moving body 8 at a portion reached by a magnetic flux from an edge e1 of the N-pole at the front in a rotating direction is different from a direction of the eddy current 5e produced in the side surface of the moving body 8 at a portion reached by a magnetic flux from an edge e2 of the N-pole at the rear in the rotating direction. The eddy current 5e produced by the magnetic flux from the edge e2 of the N-pole at the rear in the rotating direction flows in such a direction as to produce a magnetic flux in an opposite direction to a direction of the magnetic flux from the N-pole. On the other hand, the eddy current 5d produced in the side surface of the moving body 8 at a portion reached by the magnetic flux from the edge e1 of the N-pole at the front in the rotating direction flows in such a direction as to produce a magnetic flux in the same direction as a direction of the magnetic flux from the N-pole. The eddy currents 5d, 5e both flow in such directions as to hinder a change in the magnetic fluxes from the rotating body 2 caused by rotation of the moving body 8.

As described above, on the edge e1 side of the N-pole of the rotating body 2 at the front in the rotating direction, the direction of the magnetic flux produced by the eddy current 5d is the same as the direction of the magnetic flux from the N-pole of the rotating body 2, and thus an attractive force acts therebetween. On the other hand, on the edge e2 side of the N-pole of the rotating body 2 at the rear in the rotating direction, the direction of the magnetic flux produced by the eddy current 5e is opposite to the direction of the magnetic flux from the N-pole of the rotating body 2, and thus a repulsive force acts therebetween. When the first side surface 2d of the rotating body 2 has a surface speed lower than a surface speed of the side surface of the moving body 8 opposed thereto, the above-described relationship between the rotating body 2 and the eddy currents 5d, 5e holds true at all times. Thus, the rotating body 2 rotates at a surface speed lower than a surface speed of the side surface 8a of the moving body 8 opposed thereto, so as to run after a moving surface of the side surface 8a of the moving body 8 opposed thereto.

The above principle of rotation of the rotating body 2 can also be described in terms of a repulsive force based on a Lorentz force. As described above, the direction of the eddy current 5d produced by the magnetic flux from the edge e1 of the N-pole of the rotating body 2 at the front in the rotating direction is opposite to the direction of the eddy current 5e produced by the magnetic flux from the edge e2 of the rotating body 2 at the rear in the rotating direction, and thus a current flows in a constant direction directly under the N-pole at all times. When the moving body 8 rotates in a direction indicated by an arrow shown in Fig. 4, currents produced by the eddy currents 5d, 5e are subjected to a Lorentz force in a direction opposite to the rotating direction of the moving body 8. Therefore, the rotating body 2 subjected to magnetic fluxes produced by the eddy currents 5d, 5e rotates under a repulsive force based on the Lorentz force, the repulsive force acting in the rotating direction of the moving body 8.

Thus, the rotating body 2 and the moving body 8 move in the same direction at their respective opposed surfaces. Therefore, when the rotating body 2 is opposed to the moving body 8 at a position offset from a rotation axis of the moving body 8 as shown in Fig. 4, the rotating direction of the rotating body 2 is opposite to the rotating direction of the moving body 8.

Next, a description is given of a procedure for estimating the moving or rotating speed of the moving body 9. As described above, the rotating body 2 rotates in accordance with the moving or rotating speed of the moving body 8. More specifically, the rotating body 2 rotates in synchronization with the moving or rotating speed of the moving body 8.

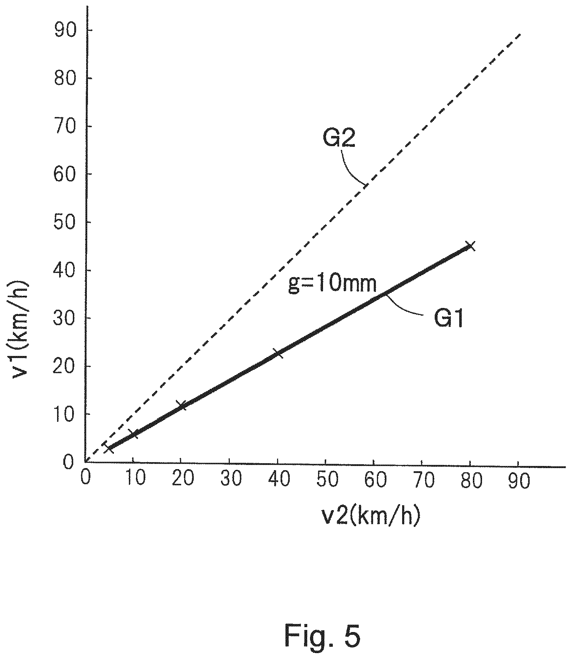

Fig. 5 is a graph showing the correlation between the moving speed of the moving body 8 and the rotating speed of the rotating body 2. In Fig. 5, a horizontal axis indicates a moving speed v2 (km/h) of the moving body 8, and a vertical axis indicates a rotating speed v1 (km/h) of the rotating body 2 detected by the detector 3. Fig. 5 includes a solid line representing an actual measurement graph G1 taking into account eddy current loss, mechanical loss, and so on and a broken line representing an ideal graph G2 not taking account eddy current loss, mechanical loss, and so on. The solid line and the broken line in Fig. 5 indicate characteristics for the case where the gap g between the moving body 8 and the rotating body 2 is 10 mm. When the gap g changes, the inclinations in the graph of Fig. 5 change. The gap g refers to a minimum distance between the surfaces of the moving body 8 and the rotating body 2 opposed to each other.

As is understood from the graph in Fig. 5, the rotating speed of the rotating body 2 and the moving speed of the moving body 8 are related linearly, and when the moving speed of the moving body 8 changes, the rotating speed of the rotating body 2 changes linearly in synchronization with the change in the moving speed of the moving body 8.

The graph in Fig. 5 shows characteristics in a case where the moving body 8 moves in one direction or in a plurality of directions, and when the moving body 8 rotates, the rotating speed of the moving body 8 and the rotating speed of the rotating body 2 are also related linearly.

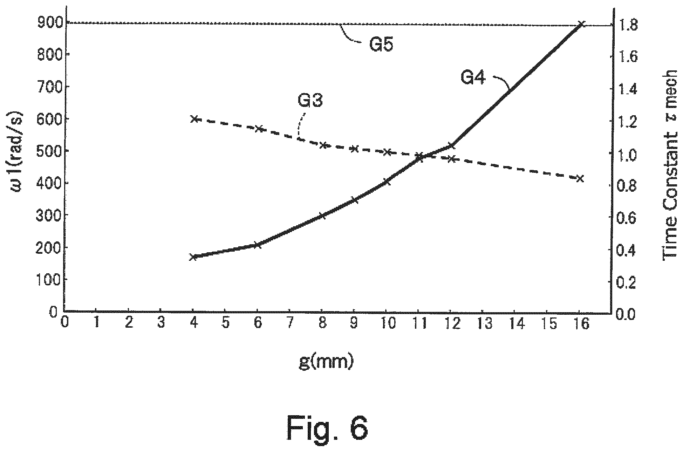

Fig. 6 includes a graph G3 showing a correlation between the rotating speed of the rotating body 2 and the gap g between the moving body 8 and the rotating body 2, a graph G4 showing a correlation between the gap g and a time constant of the rotating body 2, and a graph G5 showing an outer peripheral surface speed of the rotating body 2 being constant at 80 km/h. In Fig. 6, the horizontal axis indicates the gap g (mm), and the vertical axis indicates the rotating speed $\omega 1$ (rad/s) or a time constant $\tau$mech (s). Here, a time constant refers to a length of time required for the rotating speed of the rotating body 2 to reach 63.2% of a steady-state speed in a case where the speed of the moving body 8 is changed stepwise from 0 km/h to 80 km/h, thus reflecting a response speed. In a case where the rotating speed indicated by the vertical axis in Fig. 6 is expressed in terms of v1 (km/h), a conversion formula (1) below is used.

$$v1 \ (km/h) = \omega 1 \ (rad/s) \times 0.025 \ (m) \times 3600 \ (s)/1000 \ ... (1)$$

In this conversion formula, 0.025 (m) is a radius of the rotating body 2. According to this conversion formula, for example, 80 km/h is equal to 889 rad/s.

As is understood from the graph G3, the smaller the gap g, the stronger magnetic coupling between the moving body 8 and the rotating body 2, and thus the rotating speed of the rotating body 2 approximates to the moving or rotating speed of the moving body 8. The graph G5 corresponds to a straight line of the graph G2 in Fig. 5. Therefore, as is understood from the graphs G3 and G5, the smaller the gap g, the smaller a speed difference between the moving body 8 and the rotating body 2. The graph G4 shows the above-described response time of the rotating body 2. As is understood from the graph G4, the wider the gap, the poorer responsiveness becomes.

As is understood from Fig. 6, the rotating speed and responsiveness of the rotating body 2 changes in accordance with the gap between the moving body 8 and the rotating body 2, and thus in performing measurement for obtaining the graphs in Fig. 5, it is required that the gap between the moving body 8 and the rotating body 2 be preset. Therefore, in this embodiment, with the gap between the moving body 8 and the rotating body 2 set to a predetermined value, the correlation between the moving or rotating speed of the moving body 8 and the rotating speed of the rotating body 2 is previously determined.

For example, it is conceivable to previously create a table correlating the moving speed of the moving body 8 and the rotating speed of the rotating body 2 for a plurality of points on the graphs in Fig. 5. In this case, from the table, the moving speed estimating unit 4 can refer to a moving speed of the moving body 8 corresponding to the rotating speed of the rotating body 2 detected by the detector 3.

Alternatively, it is possible that a formula is established beforehand based on the graphs in Fig. 5, and the moving speed estimating unit 4 inputs the rotating speed of the rotating body 2 detected by the detector 3 into the formula to determine, by calculation, the moving speed of the moving body 8 corresponding thereto. Upon the moving or rotating speed of the moving body 8 being estimated, acceleration information can be detected by differentiating the speed, and positional information on the moving body 8 can be detected by integrating the moving or rotating speed of the moving body 8.

The respective opposed surfaces of the rotating body 2 and the moving body 8 partially overlap each other, and when there occurs a change in degree of overlapping, the degree of magnetic coupling between the moving body 8 and the rotating body 2 changes to change inclinations of the graphs in Fig. 5 and Fig. 6. Accordingly, in obtaining a graph showing a correlation between the moving speed of the moving body 8 and the rotating speed of the rotating body 2 as shown in Fig. 5, it is required that the degree of magnetic coupling between the moving body 8 and the rotating body 2 including the gap therebetween be set beforehand to a predetermined value. The degree of magnetic coupling between the moving body 8 and the rotating body 2 changes depending on the gap between the moving body 8 and the rotating body 2 or the degree of overlapping between the respective opposed surfaces of the moving body 8 and the rotating body 2. Furthermore, the degree of magnetic coupling changes also in a case where foreign matter has adhered to the opposed surfaces of the moving body 8 and the rotating body 2 or in a case where some type of magnetism blocking member is disposed between the moving body 8 and the rotating body 2. Also for the graphs in Fig. 6, fundamentally, it is preferable that a change in rotating speed of the rotating body 2 and a change in response speed of the rotating body 2 be plotted into a graph for each of the cases where the degree of magnetic coupling between the moving body 8 and the rotating body 2 is varied with various factors including the gap.

As described above, in the first embodiment, the rotating speed of the rotating body 2 that rotates in accordance with the moving or rotating direction of the moving body 8 is detected by the detector 3, and the correlation between the moving or rotating speed of the moving body 8 and the rotating speed of the rotating body 2 is previously determined. The moving or rotating speed of the moving body 8 is estimated from the rotating speed of the rotating body 2 detected by the detector 3. Thus, the moving or rotating speed of the moving body 8 can be estimated using a simple procedure.

In order to detect the moving or rotating speed of the moving body 8, the moving body 8 typically has mounted thereto a permanent magnet for detecting a speed, an optical slit ring for an encoder, a detection gear for a proximity sensor, or the like. When it is not permitted to additionally machine the moving body 8, it is possible according to this embodiment that, in a vicinity of the moving body 8, the rotating body 2 is opposed to the moving body 8, and the rotating speed of the rotating body 2 is detected by the detector 3, so that the moving or rotating speed of the moving body 8 can be accurately estimated.

(Second Embodiment of the present invention)

In the first embodiment described above, which is not according to the invention, the correlation between the moving or rotating speed of the moving body 8 and the rotating speed of the rotating body 2 is previously determined on the precondition that the degree of magnetic coupling between the moving body 8 and the rotating body 2 is preset and does not vary. In contrast, in a second embodiment, a correlation between a moving or rotating speed of a moving body 8 and a rotating speed of a rotating body 2 is previously determined for each of a plurality of degrees of magnetic coupling therebetween, and the degree of magnetic coupling at the present point in time is measured. Based on the correlation corresponding to the thus measured degree of magnetic coupling, the moving or rotating speed of the moving body 8 is estimated.

For example, in a case where the moving body 8 is a wheel of a vehicle such as a train, a periodic variation in gap between the wheel and the rotating body 2 caused by, for example, irregularities on a traveling surface can be reduced by a filtering process. However, as for a variation in gap that continues for a fixed period of time, such as a variation in gap between the wheel and the rotating body 2 due to centrifugal force applied to the vehicle traveling along a curve, it is highly likely that such a variation cannot be reduced by the filtering process. Therefore, in an environment in which a variation in gap is likely to occur, it is preferable that a correlation is previously prepared for each of a plurality of assumable degrees of magnetic coupling.

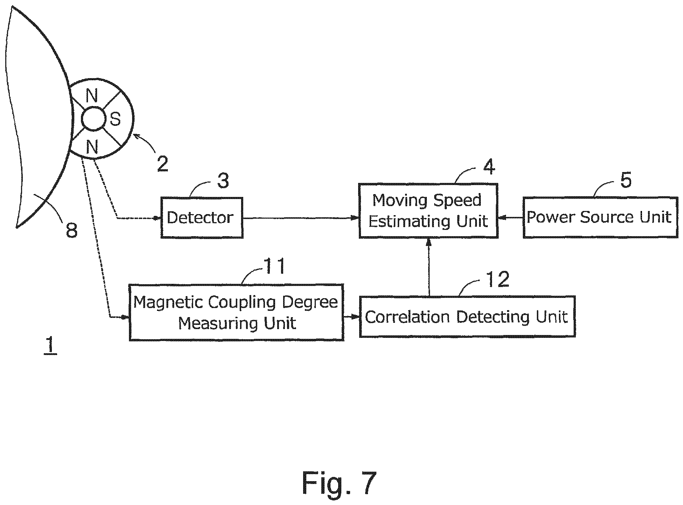

Fig. 7 is a block diagram showing a schematic configuration of a speed detecting device 1 according to the second embodiment. In FIG. 7, the same reference numerals denote constituent members common to those in Fig. 1, and the following description focuses on differences from the configuration in Fig. 1. The speed detecting device 1 in FIG. 7 is provided with a rotating body 2, a detector 3, and a moving speed estimating unit 4 and further with a magnetic coupling degree measuring unit 11 and a correlation detecting unit 12.

The magnetic coupling degree measuring unit 11 measures a degree of magnetic coupling between the rotating body 2 and the moving body 8. As described above, the degree of magnetic coupling is indicated using a gap between the rotating body 2 and the moving body 8, a degree of overlapping between respective opposed surfaces of the rotating body 2 and the moving body 8, or the like. In a case where the degree of magnetic coupling is indicated using the gap between the rotating body 2 and the moving body 8, the magnetic coupling degree measuring unit 11 measures the gap between the rotating body 2 and the moving body 8. The gap may be measured by use of an induction type proximity sensor utilizing a magnetic field, by analyzing an image of surroundings of the gap captured with an imaging device, or by transmitting/receiving ultrasound or the like between the rotating body 2 and the moving body 8.

The correlation detecting unit 12 detects a correlation between a moving or rotating speed of the moving body 8 and a rotating speed of the rotating body 2 for each of a plurality of degrees of magnetic coupling between the rotating body 2 and the moving body 8. That is, the correlation detecting unit 12 detects the correlation between the rotating speed of the rotating body 2 and the moving or rotating speed of the moving body 8 as shown in Fig. 5 for each of the plurality of degrees of magnetic coupling. The correlation detecting unit 12 may store, in an unshown storage unit, the detected correlations in the form of a table or establish a formula based on the detected correlations.

The moving speed estimating unit 4 in Fig. 7 estimates the moving or rotating speed of the moving body 8, based on, among a plurality of correlations detected by the correlation detecting unit 12, a correlation corresponding to the degree of magnetic coupling measured by the magnetic coupling degree measuring unit 11.

As described above, in the second embodiment, a correlation is previously prepared for each of a plurality of degrees of magnetic coupling, and the moving or rotating speed of the moving body 8 is estimated based on a correlation corresponding to the degree of magnetic coupling at the present point in time, and thus even in an environment in which there occurs a variation in degree of magnetic coupling between the moving body 8 and the rotating body 2, the moving or rotating speed of the moving body 8 can be accurately estimated.

(Third Embodiment - not according to the invention)

In a third embodiment, rotational energy of a rotating body 2 is converted into electric energy, which then is stored beforehand in a capacitor, and the electric energy thus stored is used to estimate a moving or rotating speed of a moving body 8.

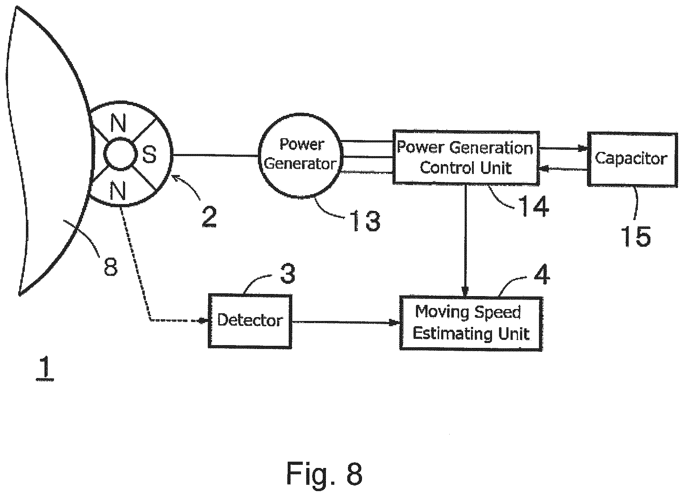

Fig. 8 is a block diagram showing a schematic configuration of a speed detecting device 1 according to the third embodiment. In addition to the configuration shown in Fig. 1, the speed detecting device 1 in Fig. 8 is provided further with a power generator 13, a power generation control unit 14, and a capacitor 15.

The power generator 13 converts kinetic energy produced by rotation of the rotating body 2 into electric energy. The power generation control unit 14 convers electric power produced by the power generator 13 into a direct current voltage. The capacitor 15 stores the electric energy obtained through conversion by the power generator 13. More specifically, the capacitor 15 stores the direct current voltage obtained through conversion by the power generation control unit 14. The electric energy stored in the capacitor 15 is used as a power source for at least one of a detector 3 and a moving speed estimating unit 4. The power generator 13 and the capacitor 15 in Fig. 8 may be added to the speed detecting device 1 shown in Fig. 7.

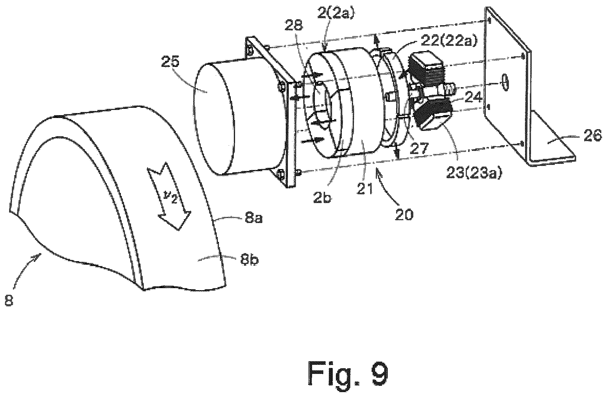

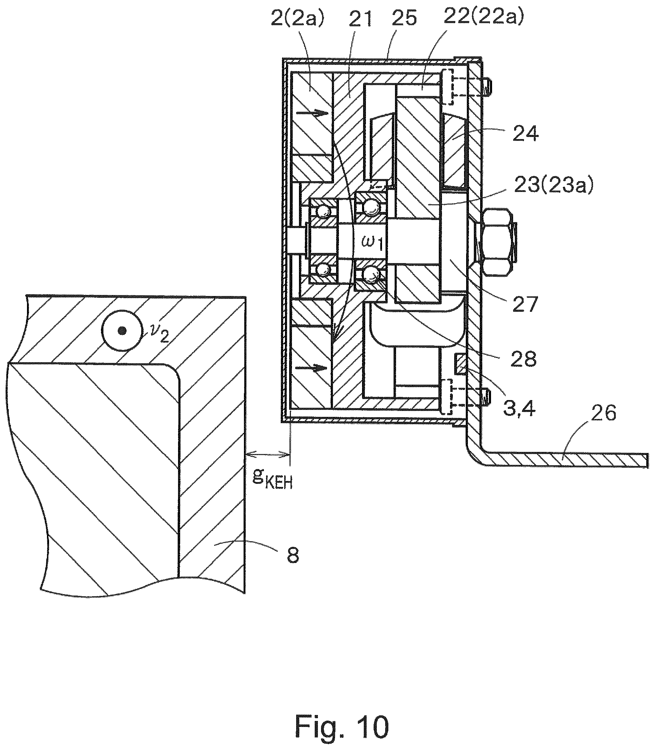

Fig. 9 is an exploded perspective view of a non-contact power generator 20 including the speed detecting device 1 shown in Fig. 8, and Fig. 10 is a sectional view of the non-contact power generator 20 shown in Fig. 9. The non-contact power generator 20 in Fig. 9 includes a rotor 21, a second rotating body 22 including a second permanent magnet 22a, a stator 23, and a coil 24 that constitute part of the power generator 13 and also constitute part of the speed detecting device 1. In the following description, the rotating body 2 and a permanent magnet 2a included in the speed detecting device 1 are referred to as a first rotating body 2 and a first permanent magnet 2a, respectively, so as to be distinguished from the second rotating body 22 and the second permanent magnet 22a included in the non-contact power generator 20, respectively.

The speed detecting device 1, the rotor 21, and the stator 23 are covered with a case (protective member) 25. The stator 23 is fixed on a mounting plate 26. The case 25 and the mounting plate 26 are not essential constituent components and may have any desired shapes and sizes.

All of the first rotating body 2, the rotor 21, and the second rotating body 22 are rotatable about a common rotary shaft 27. The first rotating body 2, the rotor 21, and the second rotating body 22 rotate integrally about the rotary shaft 27. More specifically, the rotor 21 is rotatably supported to the rotary shaft 27 via a bearing 28. The first rotating body 2, the rotor 21, and the second rotating body 22 may have the same or different diameters. In a typical example, the rotor 21 and the second rotating body 22 are connected to each other. Alternatively, the first rotating body 2, the rotor 21, and the second rotating body 22 may be physically connected to each other. In the example shown in Fig. 9 and Fig. 10, the first rotating body 2 and the rotor 21 have substantially the same diameter, and the second rotating body 22 is smaller in diameter than the rotor 21. Thus, the second rotating body 22 can be housed inside an inner peripheral surface of the rotor 21.

As shown in Fig. 9, the second rotating body 22 includes the second permanent magnet 22a having an annular shape, the second permanent magnet 22a having a plurality of magnetic poles 2b arranged circumferentially. The number of magnetic poles of the second permanent magnet 22a is not particularly limited.

The stator 23 is disposed inside an inner peripheral surface of the second permanent magnet 22a having the annular shape. The stator 23 is stationary and has a plurality of teeth 23a radiating from a center of the second permanent magnet 22a. The stator 23 is made of a magnetic material, and each of the teeth 23a has a coil 24 wound thereon. These coils 24 are arranged at such positions as to be linked with magnetic fluxes from the second permanent magnet 22a, and configured to produce an induced electromotive force according to an amount of change in the magnetic fluxes linked with the coils 24. A gap is provided between a distal end position of each of the radiating teeth 23a and the inner peripheral surface of the second permanent magnet 22a.

The power generator 13 includes the second rotating body 22, the stator 23, and the coils 24. When the first rotating body 2 is rotated by movement or rotation of the moving body 8, the rotor 21 and the second rotating body 22 also rotate integrally with the first rotating body 2. Thus, an alternating magnetic flux that periodically changes in direction is linked with the coils 24 wound on the teeth 23a of the stator 23, and an induced electromotive force is produced in the coils 24. As described above, the power generator 13 converts, via the second rotating body 22, rotational energy of the first rotating body 2 into an induced electromotive force that flows through the coils 24. The rotor 21 is made of a magnetic material and functions also as a yoke between the first rotating body 2 and the second rotating body 22. This can prevent leakage of magnetic fluxes produced in the first permanent magnet 2a and the second permanent magnet 22a and thus can improve power generation efficiency.

As shown in Fig. 10, the detector 3, the moving speed estimating unit 4, the power generation control unit 24, and the capacitor 15 included in the speed detecting device 1 are arranged in a vicinity of the first rotating body 2 and on a stationary body, such as, for example, on the mounting plate 26. These components, required to be disposed on a stationary body, may be disposed, for example, on the case 25 or may be connected as separate bodies via cables, not limited to being disposed on the mounting plate 26.

The second permanent magnet 22a and the stator 23 may function also to cancel out at least part of a cogging torque produced in the first permanent magnet 2a depending on a relative relationship in shape and position between the moving body 8 and the first permanent magnet 2a.

In a case where the first rotating body 2 in the speed detecting device 1 is covered with the case 25 as shown in Fig. 9 and Fig. 10, it is likely that a magnetic material is attracted by a magnetic force of the first permanent magnet 2a in the case 25 and thus adheres to an outer surface of the case 25. Particularly in a case where the moving body 8 is a wheel of a train, it is likely that the wheel is scraped due to contact with a rail, and shavings thereof adhere to the outer surface of the case 25. A magnetic material such as shavings adhering to the outer surface of the case 25 might cause a variation in degree of magnetic coupling between the moving body 8 and the rotating body 2. Since the rotating body 2 in the case 25 rotates in accordance with movement or rotation of the moving body 8, the magnetic material adhering to the outer surface of the case 25 also rotates in accordance with rotation of the rotating body 2 and thus can be expected to be scattered from the outer surface of the case 25 to the outside by the centrifugal force. However, as for a highly adhesive magnetic material containing oil or water or a magnetic material adhering to a portion of the rotating body in a neighborhood of a rotation center thereof, which hardly receives the centrifugal force, such a magnetic material may remain on the outer surface of the case 25 without being scattered. Therefore, there may be provided a magnetic material removing unit for removing a magnetic material adhering to the outer surface of the case 25. A specific mechanism of the magnetic material removing unit is not limited, and the magnetic material removing unit may have a mechanism similar to, for example, a wiper of a vehicle. Furthermore, the magnetic material removing unit may be driven utilizing electric energy stored in the capacitor 15. Furthermore, the case 25 may include a guide, such as a groove or a projection, provided on the outer surface thereof so as to have such a case shape that a rotating magnetic material moves along the guide and is scattered toward an outer periphery of the case 25.

As described above, in the third embodiment, kinetic energy produced by movement or rotation of the moving body 8 is converted into rotational energy of the rotating body 2, and the rotational energy of the rotating body 2 is converted into electric energy by the power generator 13 and stored in the capacitor 15. Then, utilizing the electric energy stored in the capacitor 15, the speed detecting device 1 is driven to measure the moving or rotating speed of the moving body 8. Thus, even in an environment in which no external power source is available, the moving or rotating speed of the moving body 8 can be estimated, so that a wider range of applications of the speed detecting device 1 can be obtained. Also, there is no need for a cable for connecting an external power source to the speed detecting device 1, and thus restrictions on an installation location of the speed detecting device 1 are reduced.

While the first to third embodiments described above show an example in which the side surface 8a of the moving body 8 is opposed to the principal surface 2d of the rotating body 2, the arrangement between the moving body 8 and the rotating body 2 is not limited thereto. Any other structure than the above-described structure is applicable to the speed detecting device 1 according to the present disclosure, as long as the structure includes the rotating body 2 including the permanent magnet 2a that rotates by a Lorentz force produced in accordance with a moving or rotating direction of the moving body 8.

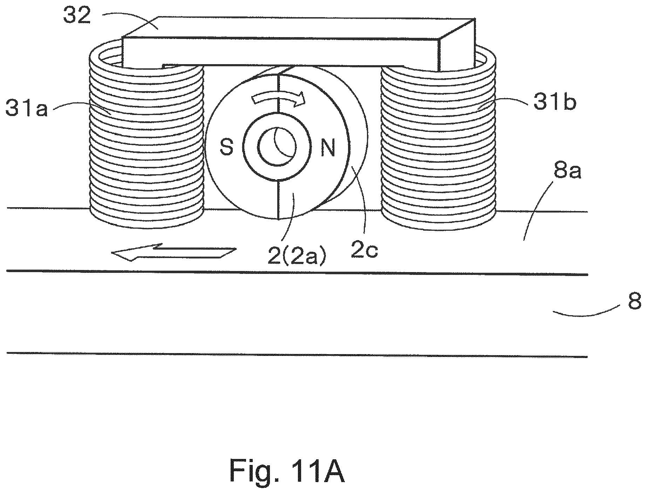

Fig. 11A is a view showing a first modification example of the speed detecting device 1. A speed detecting device 1 in Fig. 11A includes a rotating body 2 including a permanent magnet 2 that rotates about a rotation axis, two coils (a first coil 31a and a second coil 31b), and a yoke 32.

The permanent magnet 2a is spaced above and opposed to a principal surface 8a of a moving body 8 that rotates or moves, and rotates in accordance with a rotating or moving direction of the moving body 8. The permanent magnet 2a has at least two magnetic poles 2b, and magnetization directions of the magnetic poles 2b are normal to an outer peripheral surface of the permanent magnet 2a.

An outer peripheral surface 2c of the permanent magnet 2a is spaced from the principal surface 8a of the moving body 8, and the permanent magnet 2a is rotatable without contacting the principal surface 8a of the moving body 8. In the example shown in Fig. 11A, the first coil 31a, which is one of the two coils, is disposed on a rear side of the permanent magnet 2a with respect to the rotating or moving direction of the moving body 8. The second coil 31b, which is the other of the two coils, is disposed on a front side of the permanent magnet 2a with respect to the rotating or moving direction of the moving body 8. The first and second coils 31a, 31b are spaced above the principal surface 8a of the moving body 8.

Furthermore, in the example shown in Fig. 11A, the yoke 32 having a U-shape extends in and above the first and second coils 31a, 31b. A gap is provided between the yoke 32 and the permanent magnet 2a, as well as between the permanent magnet 2a and each of the first and second coils 31a, 31b. These gaps are air gaps. Therefore, the permanent magnet 2a rotates in a region surrounded by the principal surface of the moving body 8, the first and second coils 31a, 31b, and the yoke 32.

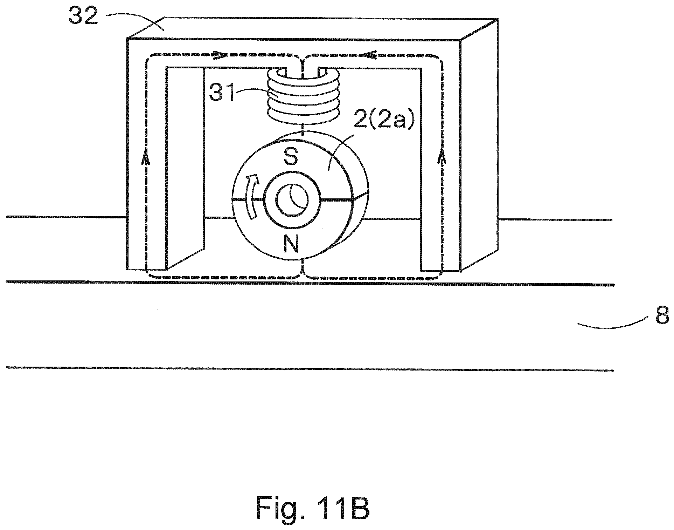

Fig. 11B is a view showing a second modification example of the speed detecting device 1, in which power generation is performed using a single coil 31. The coil 31 is wound on a yoke 32 above a permanent magnet 2a. The yoke 32 extends from above the permanent magnet 2a toward both sides of a moving body 8 in a moving direction thereof, so as to surround the permanent magnet 2. Since the coil 31 is linked with almost all magnetic fluxes from the permanent magnet 2a, it is not necessarily required to provide a plurality of coils 31. The coil 31 may be disposed at any location where all the magnetic fluxes from the permanent magnet 2a concentrate (for example, a vicinity of at least one of an N-pole and an S-pole of the permanent magnet 2a).

In either of Fig. 11A and Fig. 11B, a detector 3 configured similarly to the one in Fig. 1 is connected to the rotating body 2 including the permanent magnet 2a, and a moving speed estimating unit 4 is further provided, so that the moving speed of the moving body 8 can be estimated.

Aspects of the present invention are not limited to the foregoing individual embodiments and embrace various modifications, as long as these fall within the scope of the appended claims.

LIST OF REFERENCE NUMBERS

**[0069]**

| | |
|---|---|
| 1 | speed detecting device |
| 2 | rotating body |
| 2a | permanent magnet |
| 3 | detector |
| 4 | moving speed estimating unit |
| 5 | power source unit |
| 8 | moving body |
| 11 | magnetic coupling degree measuring unit |
| 12 | correlation detecting unit |
| 13 | power generator |
| 14 | power generation control unit |
| 15 | capacitor |
| 20 | non-contact power generator |
| 21 | rotor |
| 22 | second rotating body |
| 22a | second permanent magnet |
| 23 | stator |
| 24 | coil |
| 25 | case |
| 31a | first coil |
| 31b | second coil |
| 32 | yoke |

**Claims**

1. A speed detecting device (1), comprising:

   a rotating body (2) including a permanent magnet (2a), the rotating body (2) being spaced above a principal surface of a moving body (8), the moving body (8) being a conductor configured to move or rotate, the permanent magnet (2a) being configured to rotate about a predetermined rotation axis by a Lorentz force produced in accordance with a moving or rotating direction of the moving body (8);
   a detector (3) configured to detect a rotating speed of the rotating body (2);
   a storage unit configured to store a correlation between a moving or rotating speed of the moving body (8) and a rotating speed of the rotating body (2) based on a magnetic coupling degree between the moving body (8) and the rotating body (2);
   a moving speed estimating unit (4) configured to estimate a moving or rotating speed of the moving body (8) from the rotating speed of the rotating body (2) detected by the detector (3), based on the correlation stored into the storage unit,
   a magnetic coupling degree measuring unit (11) configured to measure a degree of magnetic coupling, based on a gap between the rotating body (2) and the moving body (8) and a degree of overlapping between the respective opposed surfaces of the rotating body (2) and the moving body (8); and
   a correlation detecting unit (12) configured to detect a correlation between the moving or rotating speed of the moving body (8) and the rotating speed of the rotating body (2) and storing the correlation into the storage unit, for each of a plurality of degrees of magnetic coupling between the rotating body (2) and the moving body (8), wherein the moving speed estimating unit (4) is configured to estimate the moving or rotating speed of the moving body (8), based on, among a plurality of correlations detected by the correlation detecting unit (12), a correlation corresponding to the degree of magnetic coupling measured by the magnetic coupling degree measuring unit (11).

**2.** The speed detecting device (1) according to claim 1, wherein the rotating body (2) is spaced from and opposed to the principal surface of the moving body (8), the principal surface being a side surface of the moving body (8) continuous with an outer peripheral surface of the moving body (8).

**3.** The speed detecting device (1) according to claim 1 or 2, further comprising:

a protective member (25) configured to cover at least part of an outer surface of the rotating body (2) including a surface thereof opposed to the principal surface of the moving body (8); and
a magnetic material removing unit in the form of a wiper configured to remove a magnetic material adhering to a surface of the protective member (25) opposed to the principal surface of the moving body (8).

**4.** The speed detecting device (1) according to any one of claims 1 to 3, wherein the permanent magnet (2a) has two or more magnetic poles opposed to the moving body (8).

**5.** The speed detecting device (1) according to any one of claims 1 to 4, further comprising:

a power generator (13) configured to convert kinetic energy produced by rotation of the rotating body (2) into electric energy; and
a capacitor (15) configured to store the electric energy obtained through conversion by the power generator (13), wherein the electric energy stored by the capacitor (15) is used as a power source for at least one of the detector (3) and the moving speed estimating unit (4).

**Patentansprüche**

**1.** Geschwindigkeits-Erfassungsvorrichtung (1), die umfasst:

einen Drehkörper (2), der einen Permanentmagneten (2a) enthält, wobei der Drehkörper (2) über einer Hauptfläche eines sich bewegenden Körpers (8) beabstandet ist, der sich bewegende Körper (8) ein Leiter ist, der so ausgeführt ist, dass er sich bewegt oder dreht, der Permanentmagnet (2a) so ausgeführt ist, dass er sich durch eine Lorentz-Kraft, die in einer Bewegungs- oder Drehrichtung des sich bewegenden Körpers (8) erzeugt wird, um eine vorgegebene Drehachse herum dreht;
einen Detektor (3), der so ausgeführt ist, dass er eine Drehgeschwindigkeit des Drehkörpers (2) erfasst;
eine Speicherungs-Einheit, die so ausgeführt ist, dass sie eine Korrelation zwischen einer Bewegungs- oder Drehgeschwindigkeit des sich bewegenden Körpers (8) und einer Drehgeschwindigkeit des Drehkörpers (2) auf Basis eines Grades magnetischer Kopplung zwischen dem sich bewegenden Körper (8) und dem Drehkörper (2) speichert;
eine Einheit (4) zum Schätzen von Bewegungsgeschwindigkeit, die so ausgeführt ist, dass sie eine Bewegungs- oder Drehgeschwindigkeit des sich bewegenden Körpers (8) anhand der von dem Detektor (3) erfassten Drehgeschwindigkeit des Drehkörpers (2) auf Basis der in der Speicherungs-Einheit gespeicherten Korrelation schätzt,
eine Einheit (11) zum Messen des Grades magnetischer Kopplung, die so ausgeführt ist, dass sie einen Grad magnetischer Kopplung auf Basis eines Spalts zwischen dem Drehkörper (2) und dem sich bewegenden Körper (8) sowie eines Grades von Überlappung zwischen den jeweiligen gegenüberliegenden Flächen des Drehkörpers (2) und des sich bewegenden Körpers (8) misst; sowie
eine Einheit (12) zum Erfassen von Korrelation, die so ausgeführt ist, dass sie für jeden einer Vielzahl von Graden magnetischer Kopplung zwischen dem Drehkörper (2) und dem sich bewegenden Körper (8) eine Korrelation zwischen der Bewegungs- oder Drehgeschwindigkeit des sich bewegenden Körpers (8) und der Drehgeschwindigkeit des Drehkörpers (2) erfasst und die Korrelation in der Speicherungs-Einheit speichert, wobei die Einheit (4) zum Schätzen von Bewegungsgeschwindigkeit so ausgeführt ist, dass sie die Bewegungs- oder Drehgeschwindigkeit des sich bewegenden Körpers (8) auf Basis einer Korrelation einer Vielzahl von der Korrelationserfassungseinheit (12) erfasster Korrelationen schätzt, die dem von der Einheit (11) zum Messen des Grades magnetischer Kopplung gemessenen Grad magnetischer Kopplung entspricht.

**2.** Geschwindigkeits-Erfassungsvorrichtung (1) nach Anspruch 1, wobei der Drehkörper (2) von der Hauptfläche des sich bewegenden Körpers (8) beabstandet ist und dieser gegenüberliegt, und die Hauptfläche eine Seitenfläche des sich bewegenden Körpers (8) ist, die sich an eine Außenumfangsfläche des sich bewegenden Körpers (8) anschließt.

3. Geschwindigkeits-Erfassungsvorrichtung (1) nach Anspruch 1 oder 2, die des Weiteren umfasst:

ein schützendes Element (25), das so ausgeführt ist, dass es wenigstens einen Teil einer Außenfläche des Drehkörpers (2) einschließlich einer Fläche desselben abdeckt, die der Hauptfläche des sich bewegenden Körpers (8) gegenüberliegt; und
eine Einheit zum Entfernen von magnetischem Material in Form eines Abstreifers, der so ausgeführt ist, dass er ein magnetisches Material entfernt, das an einer der Hauptfläche des sich bewegenden Körpers (8) gegenüberliegenden Fläche des schützenden Elementes (25) haftet.

4. Geschwindigkeits-Erfassungsvorrichtung (1) nach einem der Ansprüche 1 bis 3, wobei der Permanentmagnet (2a) zwei oder mehr dem sich bewegenden Körper (8) gegenüberliegende Magnetpole aufweist.

5. Geschwindigkeits-Erfassungsvorrichtung (1) nach einem der Ansprüche 1 bis 4, die des Weiteren umfasst:

eine Stromerzeugungseinrichtung (13), die so ausgeführt ist, dass sie durch Drehung des Drehkörpers (2) erzeugte kinetische Energie in elektrische Energie umwandelt; und
einen Kondensator (15), der so ausgeführt ist, dass er die mittels Umwandlung durch die Stromerzeugungseinrichtung (13) gewonnene elektrische Energie speichert,
wobei die von dem Kondensator (15) gespeicherte elektrische Energie als eine Stromquelle für den Detektor (3) oder/und die Einheit (4) zum Schätzen von Bewegungsgeschwindigkeit genutzt wird.


**Revendications**

1. Dispositif détecteur de vitesse (1), comprenant :

un corps rotatif (2) comportant un aimant permanent (2a), le corps rotatif (2) étant espacé au-dessus d'une surface principale d'un corps mobile (8), le corps mobile (8) étant un conducteur configuré pour se déplacer ou tourner, l'aimant permanent (2a) étant configuré pour tourner autour d'un axe de rotation prédéterminé par une force de Lorentz produite conformément à une direction de déplacement ou de rotation du corps mobile (8) ;
un détecteur (3) configuré pour détecter une vitesse de rotation du corps rotatif (2) ;
une unité de stockage configurée pour stocker une corrélation entre une vitesse de déplacement ou de rotation du corps mobile (8) et une vitesse de rotation du corps rotatif (2) sur la base d'un degré d'accouplement magnétique entre le corps mobile (8) et le corps rotatif (2) ;
une unité d'estimation de vitesse de déplacement (4) configurée pour estimer une vitesse de déplacement ou de rotation du corps mobile (8) à partir de la vitesse de rotation du corps rotatif (2) détectée par le détecteur (3), sur la base de la corrélation stockée dans l'unité de stockage,
une unité de mesure de degré d'accouplement magnétique (11) configurée pour mesurer un degré d'accouplement magnétique, sur la base d'un écartement entre le corps rotatif (2) et le corps mobile (8) et d'un degré de chevauchement entre les surfaces opposées respectives du corps rotatif (2) et du corps mobile (8) ; et
une unité de détection de corrélation (12) configurée pour détecter une corrélation entre la vitesse de déplacement ou de rotation du corps mobile (8) et la vitesse de rotation du corps rotatif (2) et stockant la corrélation dans l'unité de stockage, pour chacun d'une pluralité de degrés d'accouplement magnétique entre le corps rotatif (2) et le corps mobile (8),
dans lequel l'unité d'estimation de vitesse de déplacement (4) est configurée pour estimer la vitesse de déplacement ou de rotation du corps mobile (8), sur la base, parmi une pluralité de corrélations détectées par l'unité de détection de corrélation (12), d'une corrélation correspondant au degré d'accouplement magnétique mesuré par l'unité de mesure de degré d'accouplement magnétique (11).

2. Dispositif de détection de vitesse (1) selon la revendication 1, dans lequel le corps rotatif (2) est espacé et opposé à la surface principale du corps mobile (8), la surface principale étant une surface de côté du corps mobile (8) continue avec une surface périphérique externe du corps mobile (8).

3. Dispositif de détection de vitesse (1) selon la revendication 1 ou 2, comprenant en outre :

un organe protecteur (25) configuré pour couvrir au moins une partie d'une surface externe du corps rotatif (2) incluant une surface de celui-ci opposée à la surface principale du corps mobile (8) ; et
une unité d'enlèvement de matière magnétique sous la forme d'un racleur configurée pour enlever une matière magnétique adhérant à une surface de l'organe protecteur (25) opposée à la surface principale du corps mobile (8) .

4. Dispositif de détection de vitesse (1) selon l'une quelconque des revendications 1 à 3, dans lequel l'aimant permanent (2a) a deux pôles magnétiques ou plus opposés au corps mobile (8).

5. Dispositif de détection de vitesse (1) selon l'une quelconque des revendications 1 à 4, comprenant en outre :

un générateur d'alimentation (13) configuré pour convertir l'énergie cinétique produite par rotation du corps rotatif (2) en énergie électrique ; et
un condensateur (15) configuré pour stocker l'énergie électrique obtenue par conversion par le générateur d'alimentation (13),
dans lequel l'énergie électrique stockée par le condensateur (15) est utilisée comme source d'alimentation pour au moins l'un du détecteur (3) et de l'unité d'estimation de vitesse de déplacement (4).

Fig. 1

Fig. 2

Fig. 3

Fig. 4

Fig. 5

Fig. 6

Fig. 7

Fig. 8

Fig. 9

Fig. 10

Fig. 11A

Fig. 11B

**EP 3 553 531 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3025372 A
- EP 3309945 A1
- US 2013127268 A1
- JP 2008271614 A